# NOUVEAU FASCICULE DE BREVET EUROPEEN

(11) **EP 3 394 397 B2**
(45) Date de publication et mention de la décision concernant l'opposition: **10.08.2022**
(45) Mention de la délivrance du brevet: 02.10.2019
(21) Numéro de dépôt: 16831497.9
(22) Date de dépôt: 21.12.2016
(51) Int. Cl.: F01D 5/14, F01D 5/28

(54) **BOUCLIER DE BORD D'ATTAQUE**
VORDERKANTENUMMANTELUNG
LEADING EDGE SHEATH

(30) Priorité: 21.12.2015 FR 1563004
(43) Date de publication de la demande: 31.10.2018
(73) Titulaire: Safran Aircraft Engines, 75015 Paris (FR)
(72) Inventeur: GUIVARC'H, Jérémy, 77550 Moissy-Cramayel Cedex (FR); BASSOT, Alain, Jacques, Michel, 77550 Moissy-Cramayel Cedex (FR); DIOGO, Gérald, 77550 Moissy-Cramayel Cedex (FR); ROMERO, Jean-Louis, 77550 Moissy-Cramayel Cedex (FR); RUF, Thibault, 77550 Moissy-Cramayel Cedex (FR)
(74) Mandataire: Cabinet Beau de Loménie
(86) Numéro de dépôt international: PCT/FR2016/053603
(87) Numéro de publication internationale: WO 2017/109404

(56) Documents cités:
- WO-A2-2014/149098
- WO-A2-2014/196987
- US-A- 4 895 491
- US-A1- 2013 004 322
- US-A1- 2015 104 325

## Description

### Arrière-plan de l'invention

La présente invention concerne un bouclier de bord d'attaque pour aube de turbomachine. On entend par « turbomachine », dans ce contexte, toute machine dans laquelle peut s'opérer un transfert d'énergie entre un écoulement de fluide et au moins un aubage, comme, par exemple, un compresseur, une pompe, une turbine, une hélice, ou bien une combinaison d'au moins deux de ceux-ci.

De tels boucliers de bord d'attaque sont typiquement destinés à protéger les bords d'attaque d'aubes tournantes ou d'aubes directrices contre les impacts. On entend par « aubes », dans ce contexte, tant les aubes de soufflante que les pales d'hélice aérienne. Afin de limiter leur poids, ces aubes sont typiquement principalement formées d'un corps d'aube en composite à matrice organique, par exemple en polymère, renforcée par des fibres. Bien que ces matériaux présentent des qualités mécaniques généralement très favorables, en particulier par rapport à leur masse, ils présentent une certaine sensibilité aux impacts ponctuels. Des boucliers, typiquement en matériau métallique hautement résistant, comme les alliages de titane, sont donc normalement installés sur les bords d'attaque de telles aubes, afin de les protéger contre ces impacts. Ces boucliers prennent normalement la forme d'une fine ailette intrados et une fine ailette extrados jointes par une section plus épaisse chevauchant le bord d'attaque, l'ensemble épousant la forme de l'aube sur le bord d'attaque et des sections adjacentes de l'intrados et de l'extrados, comme par exemple dans les publications de demandes internationales de brevet WO2014/196987A2 et WO2014/149098A2. Les ailettes intrados et extrados s'étendent en hauteur et en longueur sur ces sections de, respectivement, l'intrados et l'extrados de l'aube, et servent principalement à assurer le positionnement et la fixation du bouclier sur le bord d'attaque, mais aussi à distribuer la force d'un impact et dissiper son énergie sur une plus grande surface du corps d'aube. Pour cette raison, l'ailette intrados présente typiquement, sur toute la hauteur du bouclier, une plus grande longueur que l'ailette extrados, puisque l'intrados de l'aube est plus exposé aux impacts. Toutefois, en particulier sur les aubes tournantes, cette longueur supplémentaire de l'ailette intrados pose l'inconvénient d'augmenter de manière sensible la masse du bouclier, ainsi que son inertie autour d'un axe aligné avec la direction de la hauteur.

### Objet et résumé de l'invention

La présente divulgation vise à remédier à ces inconvénients, en proposant une aube de turbomachine avec un bouclier de bord d'attaque qui permette d'offrir une protection appropriée à l'intrados de cette aube avec une masse et une inertie réduites.

La présente divulgation concerne une aube s'étendant en hauteur d'un pied d'aube à une tête d'aube et comprenant un corps d'aube et un tel bouclier de bord d'attaque assemblé sur le corps d'aube, le corps d'aube étant en matériau composite à matrice en polymère renforcée par des fibres, le bouclier de bord d'attaque étant en un matériau avant une meilleure résistance aux impacts ponctuels que le matériau composite du corps d'aube, et le premier segment du bouclier de bord d'attaque étant plus proche du pied d'aube que le deuxième segment du bouclier de bord d'attaque. Dans au moins un mode de réalisation, ce but est atteint grâce au fait que, dans ledit bouclier de bord d'attaque, qui peut être en matériau métallique et comporte une ailette intrados et une ailette extrados, s'étendant chacune en hauteur et en longueur et reliées l'une à l'autre sur leur hauteur, l'ailette intrados présente une longueur plus grande que l'ailette extrados sur un premier segment du bouclier de bord d'attaque, mais une longueur égale ou inférieure à l'ailette extrados sur un deuxième segment du bouclier de bord d'attaque.

### Objet et résumé de l'invention

Grâce à ces dispositions, il est possible de réduire la masse et l'inertie du bouclier quand le corps d'aube, côté intrados, est moins exposé aux impacts et/ou moins affecté par eux sous ledit deuxième segment du bouclier que sous ledit premier segment.

Ledit premier segment du bouclier peut s'étendre sur au moins 60% de la hauteur des ailettes intrados et extrados. Afin de continuer à assurer une protection suffisante de l'intrados, dans ledit deuxième segment du bouclier la profondeur de l'ailette intrados peut rester égale ou supérieure à 70% de la profondeur de l'ailette extrados, voire 85%.

La présente divulgation concerne aussi une turbomachine comprenant une pluralité de telles aubes, une soufflante comprenant une pluralité de telles aubes et un turboréacteur à double flux comprenant une telle soufflante.

### Brève description des dessins

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une vue schématique en perspective d'un turboréacteur à double flux ;
- les figures 2A et 2B sont des vues schématiques en perspective du côté intrados et extrados, respectivement, d'une aube tournante de la soufflante du turboréacteur de la figure 1 selon un mode de réalisation de l'aube ; et
- les figures 3 et 4 sont des vues partielles en coupe de l'aube des figures 2A et 2B selon les plans III-III et IV-IV, respectivement.

### Description détaillée de l'invention

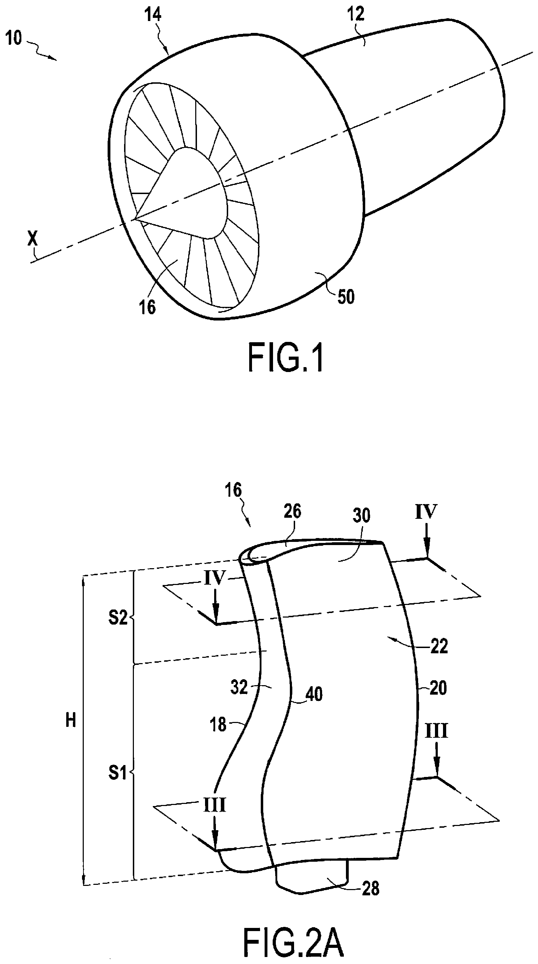

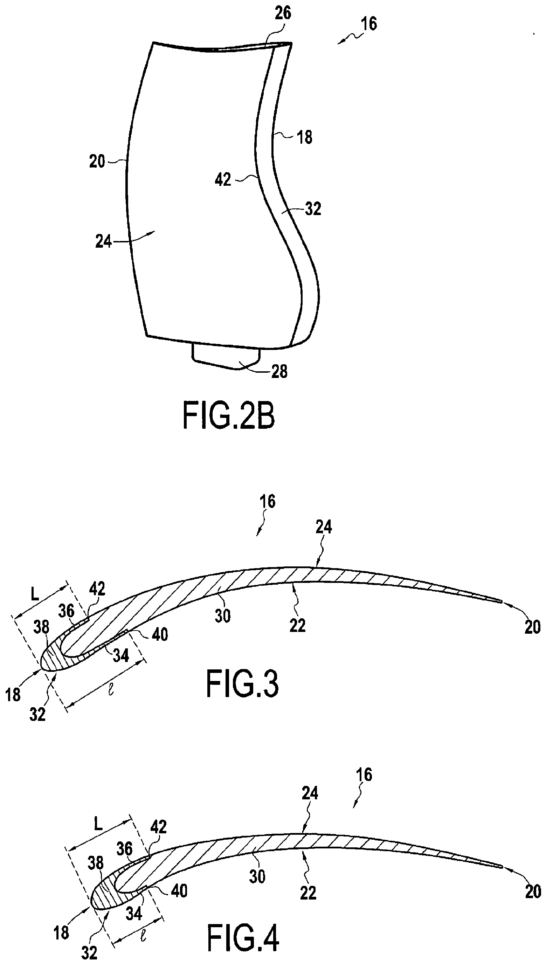

La figure 1 illustre un turboréacteur à double flux 10 comprenant un groupe générateur de gaz 12 et une soufflante 14. Cette soufflante 14 comprend une pluralité d'aubes tournantes 16, arrangées radialement autour d'un axe central X, profilées aérodynamiquement de manière à impulser l'air par leur rotation et entourées par un carter de soufflante 50. Ainsi, comme illustré sur les figures 2A, 2B, 3 et 4, chaque aube 16 présente un bord d'attaque 18, un bord de fuite 20, un intrados 22, un extrados 24, une tête d'aube 26 et un pied d'aube 28.

En fonctionnement normal, le vent relatif est sensiblement orienté vers le bord d'attaque 18 de chaque aube 16. Ainsi, ce bord d'attaque 18 est particulièrement exposé aux impacts. L'aube 16 comprenant un corps d'aube 30 en matériau composite à matrice polymère renforcée par des fibres, il convient donc de protéger le bord d'attaque 18 avec un bouclier de bord d'attaque 32 intégré à chaque aube. En d'autres termes, le bouclier de bord d'attaque 32 est assemblé sur le corps d'aube 30.

Le bouclier de bord d'attaque 32 est fabriqué en un matériau ayant une meilleure résistante aux impacts ponctuels que le matériau composite du corps d'aube 30. Le bouclier de bord d'attaque 32 est principalement métallique, et plus spécifiquement en alliage à base de titane, comme par exemple le TA6V (Ti-6Al-4V). Le bouclier de bord d'attaque 32 pourrait également être en acier ou en alliage métallique communément désigné par la marque déposée Inconel^{™}. On parle par la suite d'Inconel pour désigner un alliage à base de fer alliés avec du nickel et du chrome.

Le bouclier de bord d'attaque 32 comporte une ailette intrados 34, une ailette extrados 36, qui s'étendent chacune en hauteur sur une hauteur H du bouclier 32 et une section centrale 38 plus épaisse, destinée à chevaucher un bord du corps d'aube 30 et reliant l'ailette intrados 34 et l'ailette extrados 36 sur cette hauteur H. Les ailettes intrados et extrados 34, 36 assurent le positionnement du bouclier 32 sur le corps d'aube 30. Les ailettes intrados et extrados 34, 36 présentent chacune un bord libre 40, 42 et s'étendent chacune en longueur de la section centrale 38 au bord libre 40, 42 correspondant.

Le vent relatif présentant normalement un certain angle d'attaque par rapport au bord d'attaque 18, l'intrados de l'aube 16 est plus exposé aux impacts à proximité du bord d'attaque 18 que l'extrados. Pour cette raison, dans le mode de réalisation illustré, dans un premier segment S1 du bouclier de bord d'attaque 32 adjacent au pied d'aube 28, et s'étendant sur au moins 60 %, voire 75% de la hauteur H du bouclier de bord d'attaque, la longueur l de l'ailette intrados 34, mesurée du bord d'attaque 18 au bord libre 40, est supérieure à la longueur L de l'ailette extrados 36, mesurée du bord d'attaque 18 au bord libre 42 correspondant, comme illustré sur la figure 3.

Toutefois, grâce vrillage de l'aube et/ou au carter 50, dont l'entrée peut être plus étroite que la soufflante 14, est moins exposée aux impacts à forte énergie. Ainsi, la longueur l de l'ailette intrados 34 peut être réduite pour devenir égale ou inférieure à la longueur L de l'ailette extrados 36 dans un deuxième segment S2 du bouclier de bord d'attaque 32, plus proche de la tête d'aube 26 que du pied d'aube 28, comme illustré sur la figure 4. Ainsi, la masse et surtout l'inertie du bouclier 32 peuvent être réduites sans affecter négativement de manière sensible leur protection par ce même bouclier de bord d'attaque 32. Dans ce deuxième segment S2 du bouclier de bord d'attaque 32, la longueur l de l'ailette intrados 34 peut rester égale ou supérieure à 70%, voire 85% de la longueur L de l'ailette extrados 36.

Quoique la présente invention ait été décrite en se référant à un exemple de réalisation spécifique, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Aube (16) de turbomachine, ladite aube (16) s'étendant en hauteur d'un pied d'aube (28) à une tête d'aube (26) et comprenant :
un corps d'aube (30) en matériau composite à matrice en polymère renforcée par des fibres, et
un bouclier de bord d'attaque (32) en un matériau ayant une meilleure résistance aux impacts ponctuels que le matériau composite du corps d'aube (30), assemblé sur le corps d'aube (30), ledit bouclier de bord d'attaque (32) comportant une ailette intrados (34) et une ailette extrados (36), s'étendant chacune en hauteur et en longueur, reliées l'une à l'autre sur leur hauteur, et
l'aube (16) étant **caractérisée en ce que** l'ailette intrados (34) présente une longueur plus grande que l'ailette extrados (36) sur un premier segment (S1) du bouclier de bord d'attaque (32), et une longueur égale ou inférieure à l'ailette extrados (36) sur un deuxième segment (S2) du bouclier de bord d'attaque (32), le premier segment (S1) du bouclier de bord d'attaque (32) étant plus proche du pied d'aube (28) que le deuxième segment (S2) du bouclier de bord d'attaque (32).

2. Aube (16) suivant la revendication 1, dans lequel ledit premier segment (S1) du bouclier (32) s'étend sur au moins 60% de la hauteur des ailettes intrados et extrados (34,36).

3. Aube (16) suivant l'une quelconque des revendications précédentes, dans lequel, dans ledit deuxième segment (S2) du bouclier la longueur de l'ailette intrados (34) reste égale ou supérieure à 70% de la longueur de l'ailette extrados.

4. Aube (16) suivant la revendication 3, dans lequel, dans ledit deuxième segment (S2) du bouclier la longueur de l'ailette intrados (34) reste égale ou supérieure à 85% de la longueur de l'ailette extrados.

5. Aube (16) suivant l'une quelconque des revendications précédentes, dans laquelle le bouclier (32) est en matériau métallique.

6. Turbomachine comprenant une pluralité d'aubes (16) selon l'une quelconque des revendications précédentes.

7. Soufflante (14) comprenant une pluralité d'aubes (16) selon l'une quelconque des revendications précédentes.

8. Turboréacteur à double flux (10) comprenant une soufflante (14) selon la revendication 6.

## Patentansprüche

1. Eine Schaufel (16) für eine Turbomaschine, wobei gesagte Schaufel (16) sich in der Höhe von einem Schaufelfuß (28) zu einem Schaufelkopf (26) erstreckt und:
einen aus Verbundwerkstoff mit einer faserverstärkten Polymermatrix bestehenden Schaufelkörper (9) sowie
einen an dem Schaufelkörper (30) angebrachten Vorderkantenschutzschild (32) der aus einem Material besteht, das eine bessere Widerstandsfähigkeit gegen punktuelle Einschläge als der Verbundwerkstoff des Schaufelkörpers (9) aufweist, umfasst, , wobei der Vorderkantenschutzschild (32) einen vorderseitigen Flügel (34) und einen rückseitigen Flügel (36) aufweist, die sich jeweils in der Höhe und der Länge erstrecken, die über ihre Höhe miteinander verbunden sind, und
die Schaufel (16) **dadurch gekennzeichnet ist, dass** der vorderseitige Flügel (34) eine größere Länge als der rückseitige Flügel (36) über ein erstes Segment (S1) des Vorderkantenschutzschildes (32) sowie eine gleiche oder kleinere Länge als der rückseitige Flügel (36) über ein zweites Segment (S2) des Vorderkantenschutzschildes (32) aufweist, und das erste Segment (S1) des Vorderkantenschutzschildes (32) näher dem Schaufelfuß (28) liegt als das zweite Segment (S2) des Vorderkantenschutzschildes (32).

2. Schaufel (16) nach Anspruch 1, bei dem sich das erste Segment (S1) des Schutzschildes (32) über wenigstens 60 % der Höhe der vorderseitigen und rückseitigen Flügel (34, 36) erstreckt.

3. Schaufel (16) nach einem der vorhergehenden Ansprüche, bei dem in dem zweiten Segment (S2) des Schutzschildes die Länge des vorderseitigen Flügels (34) gleich oder größer als 70 % der Länge des rückseitigen Flügels bleibt.

4. Schaufel (16) nach Anspruch 3, bei dem in dem zweiten Segment (S2) des Schutzschildes die Länge des vorderseitigen Flügels (34) gleich oder größer als 85 % der Länge des rückseitigen Flügels bleibt.

5. Schaufel (16) nach einem der vorhergehenden Ansprüche, wobei der Schutzschild (32) aus metallischem Material besteht.

6. Turbomaschine, die eine Vielzahl von Schaufeln (16) nach einem der vorhergehenden Ansprüche umfasst.

7. Gebläse (14), das eine Vielzahl von Schaufeln (16) nach einem der vorhergehenden Ansprüche umfasst.

8. Zweistrom-Turbostrahltriebwerk (10), das ein Gebläse (14) nach Anspruch 6 umfasst.

## Claims

1. A turbomachine blade (16), said blade (16) extending along a height from a blade root (28) to a blade tip (26) and comprising:
a blade body (30) made of a composite material having a polymer matrix reinforced by fibers, and
a leading-edge shield (32) made of a material with better point impact resistance than the composite material of the blade body (30), assembled on the blade body (30), said leading-edge shield (32) having a pressure-side wing (34) and a suction-side wing (36), each extending along a height and along a length, the wings being connected together over their height, and the blade (16) being **characterised in that** the pressure-side wing (34) presenting a greater length than the suction-side wing (36) over a first segment (S1) of the leading-edge shield (32), and an equal or smaller length than the suction-side wing (36) over a second segment (S2) of the leading-edge shield (32), the first segment (S1) of the leading-edge shield (32) being closer to the blade root (28) than is the second segment (S2) of the leading-edge shield (32).

2. The blade (16) according to claim 1, wherein said first segment (S1) of the shield (32) extends over at least 60% of the height of the pressure-side and suction-side wings (34, 36).

3. The blade (16) according to either preceding claim, wherein in said second segment (S2) of the shield, the length of the pressure-side wing (34) remains equal to or greater than 70% of the length of the suction-side wing.

4. The blade (16) according to claim 3, wherein in said second segment (S2) of the shield, the length of the pressure-side wing (34) remains equal to or greater than 85% of the length of the suction-side wing.

5. The blade (16) according to any preceding claim, wherein the shield (32) is made of metal material.

6. A turbomachine including a plurality of blades (16) according to any one of the preceding claims.

7. A fan (14) including a plurality of blades (16) according to any one of the preceding claims.

8. A turbofan (10) including a fan (14) according to claim 6.
